# EUROPÄISCHE PATENTSCHRIFT

(11) **EP 4 289 665 B1**
(45) Veröffentlichungstag und Bekanntmachung des Hinweises auf die Patenterteilung: **19.11.2025**
(21) Anmeldenummer: 23177760.8
(22) Anmeldetag: 06.06.2023
(51) Int. Cl.: B60N 2/75

(54) **FAHRERSITZ-ANORDNUNG FÜR EIN FLURFÖRDERZEUG**
DRIVER'S SEAT ARRANGEMENT FOR AN INDUSTRIAL TRUCK
AGENCEMENT DE SIÈGE DE CONDUCTEUR POUR UN CHARIOT DE MANUTENTION

(30) Priorität: 08.06.2022 DE 102022114377
(43) Veröffentlichungstag der Anmeldung: 13.12.2023
(73) Patentinhaber: Jungheinrich Aktiengesellschaft, 22047 Hamburg (DE)
(72) Erfinder: ZENS, Robert, Moosburg (DE); PONGRATZ, Kurt, Geisenhausen (DE)
(74) Vertreter: Weickmann & Weickmann PartmbB

(56) Entgegenhaltungen:
- DE-A1- 102014 117 101
- US-A1- 2003 184 123
- US-A1- 2007 017 728

## Beschreibung

Die vorliegende Erfindung betrifft eine Fahrersitz-Anordnung für ein Flurförderzeug, umfassend eine im Wesentlichen horizontal liegende Sitzfläche, eine sich im Wesentlichen vertikal bezüglich der Sitzfläche hinter dieser erstreckende Rückenlehne, wenigstens eine seitlich der Sitzfläche angeordnete Armlehnen-Anordnung, welche einen sich unter einem Winkel schräg nach vorne und unten erstreckenden oberen Abschnitt umfasst, und einen der Armlehnen-Anordnung zugeordnete Bedieneinheit.

Es ist bekannt, in Flurförderzeugen, wie beispielsweise Fahrersitz-Gegengewichtsstaplern und Schubmaststaplern, Fahrersitze für eine Bedienperson des Flurförderzeugs vorzusehen, in welchen an einer Armlehne Bedienelemente vorgesehen sind. Derartige Bedienelemente sind häufig als sogenannter Bedienpilot ausgeführt, mit welchem in einer ergonomisch vorteilhaften Weise unterschiedliche Betriebsfunktionen des entsprechenden Flurförderzeugs von der auf dem Fahrersitz sitzenden Bedienperson, also dem Fahrer oder der Fahrerin, gesteuert werden können, während die jeweilige andere Hand dieser Bedienperson gleichzeitig ein Lenkrad bedienen kann.

Hierbei sind die mit derartigen Bedienelementen ausgerüsteten Armlehnen in aus dem Stand der Technik bekannten Fahrersitz-Anordnungen für Flurförderzeuge in der Regel am Fahrersitz befestigt und es bestehen Einstellmöglichkeiten für die Armlehnen in Höhen- und Längsrichtung, wobei in diesem Zusammenhang als Längsrichtung diejenige Richtung bezeichnet ist, in welche der Fahrer des Fahrzeugs auf dem Fahrersitz sitzend nach vorne blickt.

Derartige in Höhen- und Längsrichtung verstellbare Armlehnen benötigen dementsprechend zwei unabhängig voneinander vorzusehende Verstellvorrichtungen mit entsprechenden Verstellbereichen, die jede für sich spielbehaftet sind, um eine individuelle Anpassung der Fahrersitz-Anordnung auf die Anatomie eines jeweiligen Fahrers des Fahrzeugs ermöglichen zu können. Derartige zweifache Verstelleinrichtungen sind ferner auch relativ aufwendig zu montieren und zu warten und mit hohen Kosten verbunden.

Eine gattungsgemäße Fahrersitz-Anordnung mit den Merkmalen des Oberbegriffs des beiliegenden Anspruchs 1 ist beispielsweise aus der DE 10 2014 117 101 A1 bekannt. Ferner sei auf die US 2007/017728 A1 und die US 2003/184123 A1 verwiesen.

Es ist demzufolge die Aufgabe der vorliegenden Erfindung, die oben genannten Nachteile von aus dem Stand der Technik bekannten Fahrersitz-Anordnungen für Flurförderzeuge auszuräumen und unter Beibehaltung größtmöglicher Ergonomie bei der Handhabung der entsprechenden Bedienelemente eine deutliche Kostenreduzierung sowie eine Vereinfachung der Verstellkinematik für eine entsprechende Bedieneinheit zu erzielen.

Gemäß der Erfindung wird die oben formulierte Aufgabe ebenfalls durch eine Fahrersitz-Anordnung für ein Flurförderzeug gelöst, welche eine im Wesentlichen horizontal liegende Sitzfläche, eine sich im Wesentlichen vertikal bezüglich der Sitzfläche hinter dieser erstreckende Rückenlehne, wenigstens eine seitlich der Sitzfläche angeordnete Armlehnen-Anordnung, welche einen sich unter einem Winkel schräg nach vorne und unten erstreckenden oberen Abschnitt umfasst, und eine der Armlehnen-Anordnung zugeordnete Bedieneinheit umfasst, welche wiederum einen Armauflagen-Abschnitt und einen Bedienpiloten umfasst, wobei die Bedieneinheit derart in einer linear verlagerbaren Weise dem oberen Abschnitt der Armlehnen-Anordnung zugeordnet ist, dass bei einem linearen Vorschub der Bedieneinheit und damit des Armauflage-Abschnitts gleichzeitig eine vertikale Absenkung des Armauflage-Abschnitts erfolgt.

Hierbei ist erfindungsgemäß der Armauflage-Abschnitt im Wesentlichen horizontal ausgerichtet wobei diese Ausrichtung im Raum jedoch bei einer linearen und damit auch vertikalen Verlagerung davon unverändert verbleibt.

Im Übrigen kann die erfindungsgemäße Fahrersitz-Anordnung für ein Flurförderzeug in an sich bekannter Weise ausgeführt sein, beispielsweise kann der Neigungswinkel der Rückenlehne gegenüber der Sitzfläche verstellbar vorgesehen sein und es können diverse Polsterungen und/oder Stützeinrichtungen an der Fahrersitzanordnung bereitgestellt sein, um auch bei längeren Arbeitsaufträgen den entsprechenden Fahrern ein ermüdungsfreies Arbeiten zu ermöglichen.

In einer besonders kostengünstigen und einfach herzustellenden Ausführungsform kann die erfindungsgemäße Armlehnen-Anordnung durch ein Metallprofil, insbesondere ein Stahlprofil, gebildet sein, welches vorzugsweise rechteckig oder quadratisch sein kann. Ferner kann als Schnittstelle zwischen der Sitzfläche und der Armlehnen-Anordnung ein Armlehnenadapter vorgesehen sein, an welchem die Armlehnen-Anordnung angeschraubt ist, und welcher als Gussadapter ausgeführt sein kann, da erfindungsgemäß die Armlehnen-Anordnung selbst nicht gegenüber der Sitzfläche verlagerbar sein muss, sondern die Einstellung der Position der Bedieneinheit lediglich relativ zu der fest installierten Armlehnen-Anordnung erfolgen kann.

Wie weiter oben bereits angedeutet, kann die Bedieneinheit einen Bedienpiloten und ferner einen Armauflage-Abschnitt umfassen, sodass entsprechende Fahrer des Flurförderzeugs ihren Unterarm auf dem Armauflage-Abschnitt ablegen können, während sie mit ihren Fingern Bedienelemente des Bedienpiloten in anatomisch vorteilhafter Weise erreichen können, ungeachtet der momentan eingestellten Position der Bedieneinheit.

Wenngleich unterschiedliche Ausführungsformen von Vorrichtungen denkbar sind, mit welchen die Fixierung der Bedieneinheit in der Mehrzahl von Positionen innerhalb des vorbestimmten Einstellbereichs vorgenommen werden können, beispielsweise Rastelemente, welche ein Einnehmen von einer Mehrzahl von vordefinierten festen Positionen ermöglichen können, so kann ebenfalls eine Schraubvorrichtung vorgesehen sein, welche eine stufenlose Verstellung der Position der Bedieneinheit in dem vorbestimmten Einstellbereich und ein Fixieren der Bedieneinheit ermöglicht.

Um einer möglichst großen Zahl von Fahrern mit unterschiedlichen anatomischen Voraussetzungen die Verwendung der erfindungsgemäßen Fahrersitz-Anordnung in optimaler Weise ermöglichen zu können, kann der vorbestimmte Einstellbereich eine Länge von wenigstens 80 mm aufweisen, sodass hier sowohl hinsichtlich der jeweiligen Größe als auch der Armlänge potentieller Fahrer ein großer Bereich abgedeckt werden kann.

Ferner hat sich gezeigt, dass, wenngleich der Winkel zwischen dem oberen Abschnitt der Armlehnen-Anordnung und der Sitzfläche beispielsweise in einem Winkelbereich zwischen 10% und 20% liegen kann, um anatomisch geeignete Einstellungen der Bedieneinheit zu ermöglichen, er besonders vorzugsweise etwa 13% betragen kann, was sich während Erprobungen der erfindungsgemäßen Fahrersitz-Anordnung als optimaler Wert herauskristallisiert hat.

Weiterhin kann in der erfindungsgemäßen Fahrersitz-Anordnung in an sich bekannter Weise die mit der Bedieneinheit versehene Armlehnen-Anordnung aus Sicht eines auf der Sitzfläche sitzenden Fahrers auf der rechten Seite angeordnet sein, sodass mit der rechten Hand auf die Bedienelemente der Bedieneinheit zugegriffen werden kann, während der Fahrer beispielsweise gleichzeitig mit seiner linken Hand das Lenkrad des entsprechenden Fahrzeugs ergreifen und bedienen kann.

Gemäß einem zweiten Aspekt betrifft die vorliegende Erfindung ferner ein Flurförderzeug, insbesondere einen Gegengewichtstapler oder Schubmaststapler, umfassend einen Fahrzeugkörper, ein Hubgerüst und eine Fahrersitz-Anordnung der oben beschriebenen erfindungsgemäßen Art und Weise, wobei mittels der Bedieneinheit wenigstens eine dem Hubgerüst zugeordnete Arbeitsfunktion steuerbar sein kann.

Weitere Vorteile und Merkmale der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine erfindungsgemäße Fahrersitz-Anordnung für ein Flurförderzeug mit einer darauf sitzenden kleineren Person;
- Figur 2: die Fahrersitz-Anordnung aus Figur 1 mit einer darauf sitzenden größeren Person; und
- Figur 3: eine isometrische Ansicht der Bedieneinheit der Fahrersitz-Anordnung aus den Figuren 1 und 2 in vereinfachter Darstellung.

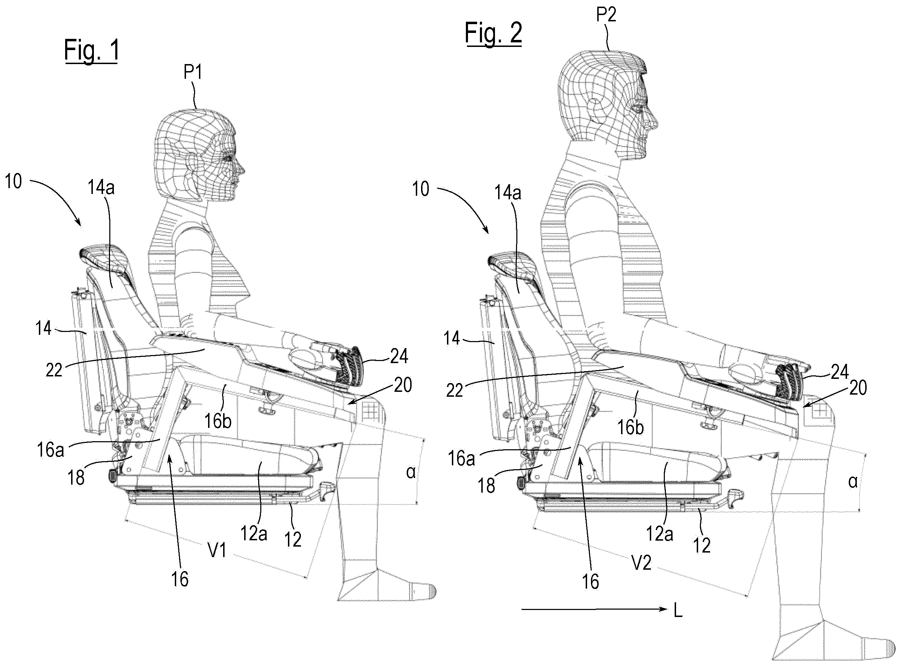

In den Figuren 1 und 2 ist jeweils eine erfindungsgemäße Fahrersitz-Anordnung für ein nicht weiter dargestelltes Flurförderzeug in einer schematischen Seitenansicht mit einem jeweils darauf sitzenden Fahrer bzw. einer Bedienperson gezeigt und ganz allgemein mit dem Bezugszeichen 10 bezeichnet. Hierbei handelt es sich bei der in Figur 1 gezeigten Person P1 um eine kleinere Person und bei der in Figur 2 gezeigten Person P2 um eine größere Person, welche jeweils eine Einstellung der Fahrersitz-Anordnung 10 auf ihre jeweilige Anatomie vorgenommen haben, wie im Folgenden erläutert werden wird.

Zunächst einmal umfasst die erfindungsgemäße Fahrersitz-Anordnung 10 eine im Wesentlichen horizontal liegende Sitzfläche 12 mit einer darauf vorgesehenen Polsterung 12a sowie eine sich im Wesentlichen vertikal bezüglich der Sitzfläche 12 gemäß einer Längsrichtung L hinter dieser erstreckenden Rückenlehne 14, welche ebenfalls mit einer Polsterung 14a versehen ist, um den Personen P1 und P2 jeweils ein bequemes und möglichst wenig ermüdendes Arbeiten während eines Sitzens auf der Sitzfläche 12 zu ermöglichen. Hierbei kann die Rückenlehne 14 bezüglich ihres Winkels gegenüber der Sitzfläche 12 in einem gewissen Bereich einstellbar sein, sodass im Rahmen dieser Einstellung die Lage der Rückenlehne 14 selbstverständlich von einer streng vertikalen Ausrichtung abweichen kann.

Da in der gezeigten Ausführungsform die definierte Längsrichtung L der Blickrichtung der Personen P1 und P2 entspricht, wenn diese auf der Sitzfläche 12 sitzend gerade nach vorne blicken, befindet sich bezogen auf diese Längsrichtung L rechts seitlich der Sitzfläche 12 angeordnet eine Armlehnen-Anordnung 16, welche über einen als Gussadapter ausgeführten Armlehnenadapter 18 mit der Sitzfläche 12 verbunden ist. Hierbei umfasst die Armlehnen-Anordnung 16 einen sich schräg nach oben und vorne erstreckenden hinteren Abschnitt 16a sowie einen sich unter einem Winkel α gegenüber der horizontal angeordneten Sitzfläche 12 nach vorne und unten erstreckenden oberen Abschnitt 16b.

Hierbei ist die Armlehnen-Anordnung, also der hintere Abschnitt 16a und der obere Abschnitt 16b, durch ein Metallprofil gebildet und an dem bereits angesprochenen Armlehnenadapter 18 angeschraubt. An der Oberseite des oberen Abschnitts 16b der Armlehnen-Anordnung 16 ist nun ferner in einer linear verlagerbaren Weise eine Bedieneinheit 20 angebracht, welche mittels einer Schraubvorrichtung stufenlos in verschiedenen Positionen entlang eines vorbestimmten Einstellbereichs fixierbar ist, wobei die lineare Verlagerbarkeit durch eine Führung oder ein Schienensystem bewerkstelligt sein kann.

Geht man davon aus, dass die in Fig. 1 gezeigte Position der Bedieneinheit 20 einer hintersten möglichen Position und die in Fig. 2 gezeigte Position der Bedieneinheit 20 einer vordersten möglichen Position bezogen auf die Längsrichtung L davon entspricht, so ist der angesprochene Einstellbereich ist durch die Differenz der beiden Maße V1 und V2 definiert. In der hier gezeigten Ausführungsform kann die Länge V1 beispielsweise 442 mm betragen, während die Länge V2 522 mm betragen kann, wodurch sich ein vorbestimmter Einstellbereich vom 80mm ergibt.

Ferner soll darauf hingewiesen sein, dass die Bedieneinheit 20 einen beispielsweise aus einem Kunststoff gebildeten Armauflage-Abschnitt 22 für eine Auflegen des Unterarms der jeweiligen Bedienperson P1 bzw. P2 sowie einen Bedienpiloten 24 umfasst, welcher durch das Vorsehen einer Mehrzahl von einzelnen Bedienelementen eine Steuerung unterschiedlicher Arbeitsfunktionen des entsprechenden hier nicht weiter dargestellten Flurförderzeugs mit den Fingern der rechten Hand der jeweiligen Bedienperson P1 bzw. P2 ermöglicht.

Wie sich durch einen Vergleich der beiden Figuren 1 und 2 ergibt, kann durch die Einstellbarkeit der Position der Bedieneinheit 20 bezüglich der Armlehnen-Anordnung 16 zusammen mit der Neigung des oberen Abschnitts 16b der Armlehnen-Anordnung 16 eine damit verbundene ebenfalls um den Winkel α gegenüber der Horizontalen geneigte Verstellrichtung der Bedieneinheit erreicht werden. Dementsprechend können sowohl die relativ kleine Person P1 als auch die relativ große Person P2 in einer anatomisch optimalen und wenig ermüdenden Körperhaltung den Bedienpiloten 24 bedienen, das heißt aufrecht sitzend mit geradem Rücken, im Wesentlichen vertikal nach unten verlaufendem Oberarm und leicht gegen die Horizontale nach unten verlaufendem Unterarm. Auf diese Weise wird durch die oben beschriebene Einstellbarkeit der Bedieneinheit 20 der erfindungsgemäßen Fahrersitz-Anordnung 10 in einer einfachen und kostengünstigen Weise durch das Vorsehen lediglich eines einzelnen Einstellbereichs bei beiden Bedienpersonen P1 und P2 mit unterschiedlicher Anatomie ein anatomisch optimales und ermüdungsarmes Arbeiten auch für längere Zeit ermöglicht.

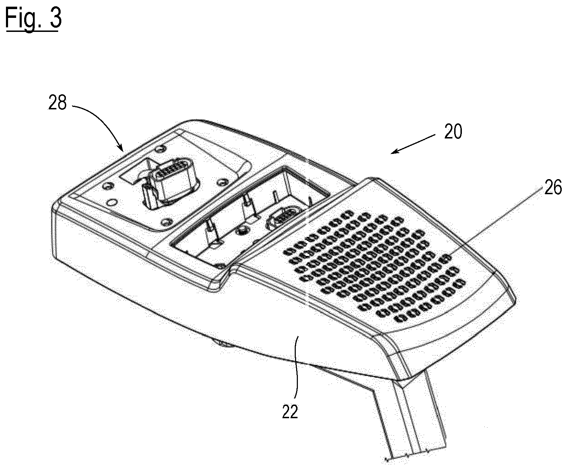

Zuletzt sei noch auf Figur 3 verwiesen, in welcher die Bedieneinheit 20 der Fahrersitz-Anordnung 10 aus den Figuren 1 und 2 in vereinfachter Darstellung gezeigt ist. Hierbei ist auf eine Darstellung des Bedienpiloten 24 verzichtet worden, sondern es sind lediglich die elektrischen und mechanischen Schnittstellen 28 gezeigt, welche die Montage des Bedienpiloten erlauben. Ferner sei darauf hingewiesen, dass der Armauflage-Abschnitt 22 mit Belüftungsöffnungen 26 versehen ist, welche ein Schwitzen der Bedienperson verhindern sollen und damit den Bedienkomfort der Fahrersitz-Anordnung 10 weiter erhöhen.

Funktionell gesprochen wird durch die in den Figuren 1 und 2 dargestellte Ausgestaltung der Fahrersitz-Anordnung 10 die Wirkung erzielt, dass bei einer linearen Verlagerung des im Wesentlichen horizontal orientierten Armauflage-Abschnitts 22 gleichzeitig eine vertikale Lageänderung davon erfolgt, insbesondere bei einem Vorschub von der Bedienperson P1 bzw. P2 weg eine vertikale Absenkung bei gleichbleibender Orientierung des Armauflage-Abschnitts 22 im Raum.

## Patentansprüche

1. Fahrersitz-Anordnung (10) für ein Flurförderzeug, umfassend:
- eine im Wesentlichen horizontal liegende Sitzfläche (12),
- eine sich im Wesentlichen vertikal bezüglich der Sitzfläche (12) hinter dieser erstreckende Rückenlehne (14);
- wenigstens eine seitlich der Sitzfläche (12) angeordnete Armlehnen-Anordnung (16), welche einen sich unter einem Winkel (α) schräg nach vorne und unten erstreckenden oberen Abschnitt (16b) umfasst; und
- eine der Armlehnen-Anordnung (16) zugeordnete Bedieneinheit (20), welche einen Armauflagen-Abschnitt (22) und einen Bedienpiloten (24) umfasst;
wobei die Bedieneinheit (20) derart in einer linear verlagerbaren Weise dem oberen Abschnitt (16b) der Armlehnen-Anordnung (16) zugeordnet ist, dass bei einem linearen Vorschub der Bedieneinheit (20) und damit des Armauflage-Abschnitts (22) gleichzeitig eine vertikale Absenkung des Armauflage-Abschnitts (22) erfolgt,
**dadurch gekennzeichnet, dass** der Armauflage-Abschnitt (22) im Wesentlichen horizontal ausgerichtet ist.

2. Fahrersitz-Anordnung (10) nach Anspruch 1,
wobei die Bedieneinheit (20) einen Armauflagen-Abschnitt (22) und einen Bedienpiloten (24) umfasst.

3. Fahrersitz-Anordnung (10) nach einem der vorhergehenden Ansprüche, wobei die Armlehnen-Anordnung (16) durch ein Metallprofil, insbesondere ein Stahlprofil, gebildet ist, welches vorzugsweise rechteckig oder quadratisch ist.

4. Fahrersitz-Anordnung (10) nach einem der vorhergehenden Ansprüche, wobei als Schnittstelle (18) zwischen der Sitzfläche (12) und der Armlehnen-Anordnung (16) ein Armlehnenadapter vorgesehen ist, an welchen die Armlehnen-Anordnung (16) angeschraubt ist, und welcher vorzugsweise als Gussadapter ausgeführt ist.

5. Fahrersitz-Anordnung (10) nach einem der vorhergehenden Ansprüche, wobei der vorbestimmte Einstellbereich eine Länge von wenigstens 80 mm aufweist.

6. Fahrersitz-Anordnung (10) nach einem der vorhergehenden Ansprüche, wobei der Winkel (α) zwischen dem oberen Abschnitt (16b) der Armlehnen-Anordnung (16) und der Sitzfläche (12) zwischen 10° und 20° beträgt, vorzugsweise etwa 13°.

7. Fahrersitz-Anordnung (10) nach einem der vorhergehenden Ansprüche, wobei die mit der Bedieneinheit (20) versehene Armlehnen-Anordnung (16) aus Sicht eines auf der Sitzfläche sitzenden Fahrers (P1, P2) auf der rechten Seite angeordnet ist.

8. Flurförderzeug, insbesondere Gegengewichtstapler oder Schubmaststapler, umfassend einen Fahrzeugkörper, ein Hubgerüst und eine Fahrersitz-Anordnung (10) nach einem der vorhergehenden Ansprüche.

9. Flurförderzeug nach Anspruch 8, wobei mittels der Bedieneinheit (20) wenigstens eine dem Hubgerüst zugeordnete Arbeitsfunktion steuerbar ist.

## Claims

1. Driver seat arrangement (10) for an industrial truck, comprising:
- a substantially horizontally oriented seat surface (12),
- a backrest (14) extending substantially vertically behind and relative to the seat surface (12);
- at least one armrest arrangement (16) laterally arranged to the seat surface (12) which comprises an upper section (16b) extending obliquely forward and downward at an angle (α); and
- one operation unit (20) assigned to one of the armrest arrangements (16) which comprises an arm support section (22) and an operation pilot (24);
wherein the operation unit (20) is assigned to the upper section (16b) of the armrest arrangement (16) so as to be linearly displaceable, such that a linear feed of the operation unit (20), and thus of the arm support section (22), simultaneously causes a vertical lowering of the arm support section (22),
**characterized in that** the arm support section (22) is aligned substantially horizontally.

2. Driver seat arrangement (10) according to claim 1,
wherein the operation unit (20) comprises an arm support section (22) and an operation pilot (24).

3. Driver seat arrangement (10) according to any one of the preceding claims, wherein the armrest arrangement (16) is formed by a metal profile, in particular a steel profile, which is preferably rectangular or square.

4. Driver seat arrangement (10) according to any one of the preceding claims, wherein an armrest adaptor is provided as interface (18) between the seat surface (12) and the armrest arrangement (16) to which the armrest arrangement (16) is screwed, and which is preferably configured as a cast adapter.

5. Driver seat arrangement (10) according to any one of the preceding claims, wherein the predefined adjustment range has a length of at least 80 mm.

6. Driver seat arrangement (10) according to any one of the preceding claims, wherein the angle (α) between the upper section (16b) of the armrest arrangement (16) and the seat surface (12) is between 10° and 20°, preferably around 13°.

7. Driver seat arrangement (10) according to any one of the preceding claims, wherein the armrest arrangement (16) provided with an operation unit (20) is arranged at the right side from the perspective of an operator (P1, P2) sitting on the seat surface.

8. Industrial truck, in particular counterbalance forklift or reach truck, comprising a vehicle body, a lifting mast and a driver seat arrangement (10) according to any one of the preceding claims.

9. Industrial truck according to claim 8, wherein at least one of the working functions assigned to the lifting mast can be controlled by means of the operation unit (20).

## Revendications

1. Ensemble de siège conducteur (10) pour un chariot de manutention, comprenant :
- une surface d'assise (12) sensiblement horizontale,
- un dossier (14) s'étendant sensiblement verticalement derrière la surface d'assise (12) par rapport à celle-ci ;
- au moins un ensemble d'accoudoirs (16) disposé sur le côté de la surface d'assise (12), qui comprend une section supérieure (16b) s'étendant en biais vers l'avant et vers le bas selon un angle (α) ; et
- une unité de commande (20) associée à l'ensemble d'accoudoirs (16), qui comprend une section d'appui-bras (22) et un pilote de commande (24) ;
l'unité de commande (20) étant associée à la section supérieure (16b) de l'ensemble d'accoudoirs (16) de manière à pouvoir être déplacée linéairement, de telle sorte que, lors d'un déplacement linéaire vers l'avant de l'unité de commande (20) et donc de la section accoudoirs (22), un abaissement vertical de la section accoudoirs (22) se produit simultanément,
**caractérisé en ce que** la section accoudoirs (22) est orientée essentiellement horizontalement.

2. Ensemble de siège conducteur (10) selon la revendication 1,
dans lequel l'unité de commande (20) comprend une section d'accoudoirs (22) et un pilote de commande (24).

3. Ensemble de siège conducteur (10) selon l'une des revendications précédentes, dans lequel l'ensemble d'accoudoirs (16) est formé par un profilé métallique, en particulier un profilé en acier, qui est de préférence rectangulaire ou carré.

4. Ensemble de siège conducteur (10) selon l'une des revendications précédentes, dans lequel un adaptateur d'accoudoirs est prévu comme interface (18) entre la surface d'assise (12) et l'ensemble d'accoudoirs (16), sur lequel l'ensemble d'accoudoirs (16) est vissé et qui est de préférence réalisé sous forme d'adaptateur moulé.

5. Ensemble de siège conducteur (10) selon l'une des revendications précédentes, dans lequel la plage de réglage prédéterminée présente une longueur d'au moins 80 mm.

6. Ensemble de siège conducteur (10) selon l'une des revendications précédentes, dans lequel l'angle (α) entre la section supérieure (16b) de l'ensemble d'accoudoirs (16) et la surface d'assise (12) est compris entre 10° et 20°, de préférence d'environ 13°.

7. Ensemble de siège conducteur (10) selon l'une des revendications précédentes, dans lequel l'ensemble d'accoudoirs (16) muni de l'unité de commande (20) est disposé sur le côté droit du point de vue d'un conducteur (P1, P2) assis sur la surface d'assise.

8. Chariot de manutention, en particulier chariot élévateur à contrepoids ou chariot élévateur à mât rétractable, comprenant un corps de véhicule, un mât de levage et un ensemble de siège conducteur (10) selon l'une des revendications précédentes.

9. Chariot de manutention selon la revendication 8, dans lequel au moins une fonction de travail associée au mât de levage peut être commandée au moyen de l'unité de commande (20).
